# EUROPEAN PATENT SPECIFICATION

(11) **EP 1 399 681 B1**
(45) Date of publication and mention of the grant of the patent: **13.10.2004**
(21) Application number: 02730538.2
(22) Date of filing: 24.06.2002
(51) Int. Cl.: F16D 66/02

(54) **BRAKE LINING WEAR SYSTEM**
BREMSBELAGVERSCHLEISSSENSOR
SYSTEME DE CONTROLE DE L'USURE DES GARNITURES DE FREINS

(30) Priority: 27.06.2001 EP 01305554
(43) Date of publication of application: 24.03.2004
(73) Proprietor: Federal-Mogul Friction Products GmbH, 65520 Bad Camberg (DE)
(72) Inventor: STRAUSS, Wilfried, 69483 Wald-Michelbach (DE); EMMETT, Robert, Allen, 56477 Rennerod (DE); HIGGINS, Denis, 51688 Wipperfuerth (DE)
(74) Representative: Harrison Goddard Foote
(86) International application number: PCT/GB2002/002878
(87) International publication number: WO 2003/002888

(56) References cited:
- EP-A- 0 992 702
- DE-C- 3 915 996
- FR-A- 2 319 880
- GB-A- 2 270 383
- US-A- 5 559 286

## Description

This invention is concerned with a braking system, particularly a braking system for use in braking vehicles.

Conventional braking systems for vehicles comprise a braking member mounted to engage a braked member with an engagement surface thereof thereby applying a braking force thereto, and operating means operable to bring about relative movement of approach between said braking member and said braked member. Where the braking system is of a disc brake type, the braked member is a disc mounted for rotation with a wheel of the vehicle and the braking member is a pad comprising friction material which is mounted to engage a side surface of the disc to apply a braking force thereto and hence to the wheel. Where the braking system is of the drum brake type, the braked member is in the form of a drum mounted for rotation with a wheel of the vehicle and the braking member is a shoe comprising a lining of friction material mounted to engage an internal surface of the drum to apply braking force thereto. It is also possible for the braked member to be the wheel itself and for the braking member to directly engage a rim portion of the wheel, this type of brake being frequently used on railway vehicles.

Where a braking system comprises friction material, the friction material wears in service and eventually requires replacement. It is, therefore, desirable to detect said wear to enable replacement to be undertaken before the brake becomes inoperable or inefficient. For this reason, some braking systems also comprise a wear sensor operable to detect wear of the braking member in service. Many types of wear sensor have been suggested. For example, electrical contacts have been embedded in the friction material to complete circuits when wear of the friction material exposes the contact. In another example, see DE 4231107A, a metallic foil coupled to a further resistor is embedded in the friction material for the foil to be gradually worn away with the friction material and the change in the electrical resistance of the foil is measured. However, the embedding of objects in the friction material complicates the manufacture of the material and may have a detrimental effect on its operation. Another approach is to measure the distance between the support for the friction material and the braked member, as this distance reduces as the friction material wears, but this requires sophisticated electronics which have to operate in a hostile environment.

Examples of wear sensors in which an element wears with the friction material can be found in US 6250429, US 5559286, FR 2319880, EP 1052423A and GB 2270383. In GB2270383 and FR 2319880, the sensor comprises a network of resistors which are worn away in turn. In the other three cases, a single resistor is worn away progressively. As the resistor presents a relatively small area to the disc, this results in only a small reduction in resistance for a given amount of wear.

It is an object of the present invention to provide a braking system which enables a simple and accurate wear sensor to be used without embedding electrical components in the friction material.

The invention provides a braking system with a brake Lining wear system according to claim 1 foil is worn away as the braking member wears, the detecting means being operable to detect the electrical resistance of the sheet of foil.

In a braking system according to the invention, the wear sensor is separate from the braking member so that the friction material is not compromised.

In a braking system in accordance with the invention the sheet of foil is progressively destroyed as said wear surface wears. This enables the wear to be continuously detected, as the electrical resistance of the sheet of foil varies with its volume. The resistance is measured in a direction transverse to the direction of wear is measured. The foil may be mounted so that it extends substantially normally to the wear surface of the sensor head or so that it extends at an angle to the wear surface. The foil may extend throughout the entire length of the sensor head or only part of the length thereof, this being appropriate if initial wear is not to be measured and/or if the sensor head is longer then the depth of the friction material.

Preferably, the foil is folded and/or coiled so that the area of the foil which is subject to wear is increased and therefore the accuracy of the change of electrical resistance measurement is also increased. Thus, the foil follows an intricate path through the block (in a transverse direction ie parallel to the wear surface) so that the length of the edge of the foil which is subject to wear is increased. A particularly advantageous form of intricate path is achieved when the foil is formed into a spiral. The foil may define apertures through which the electrically insulating material of the block passes so that the integrity of the block is increased.

Said sensor head comprises a block of electrically-insulating material which is no more wear resistant then the braking member, and the electrical component may be embedded in said block but the electrically insulating material serves the purpose of supporting the electrical component in position and also prevents short circuits. The block may comprise an electrically-insulating material selected from the group comprising glasses, ceramics and thermosetting resins.

In a braking system according to the invention, the braked member may be a disc and the braking member may be a pad of friction material mounted to engage a side surface of said disc. In this case, the wear surface of the sensor head is substantially planar. The braked member may, alternatively, be a drum and the braking member may be a lining of friction material mounted to engage an internal surface of said drum. In this case, the wear surface of the sensor head is curved to conform to the curvature of the drum.

Said block may be mounted in a recess defined by friction material of the braking member. The recess may be entirely surrounded by friction material, i.e the block is plugged into a hole in the friction material which can either be formed when the friction material is moulded or be machined. Alternatively the recess may be moulded or machined into an edge of the friction material so that the block is only partially surrounded by friction material. The block may be supported by the friction material or the block may be mounted on a support for the friction material of the braking member, for example on a steel or cast iron backing plate for the friction material. Advantageously, the block is mounted for easy removal and replacement, for example by a clipping arrangement or by screws.

There now follows a detailed description, to be read with reference to the accompanying drawings, of braking systems which are illustrative of the invention.

In the drawings:
Figure 1 is a diagrammatic end view of a wear sensor of a first illustrative braking system;
Figure 2 is a perspective view of the wear sensor shown in figure 1;
Figure 3 is a perspective view of a modification of the wear sensor shown in figures 1 and 2;
Figure 4 is a side elevational view of the wear sensor shown in figure 3;
Figure 5 is a diagrammatic cross-sectional view of a portion of a first illustrative braking system which comprises the wear sensor shown in figures 1 and 2;
Figure 6 is a view which is similar to figure 5 but shows a modification to the braking system;
Figure 7 is a plan view of a braking member of the braking system shown in figure 5 but on a reduced scale;
Figure 8 is a view which is similar to figure 7 but illustrates a further modification to the braking system shown in figure 5;
Figure 9 is a diagrammatic view showing circuitry of the braking system shown in figure 5;
Figures 10 and 11 are, respectively, graphical representations of the input and output signals of the circuitry shown in figure 9; and
Figure 12 is a diagrammatic perspective view of a second illustrative braking system

The first illustrative braking system 10 is of the disc brake type and comprises two braking members 12 (only one of which is shown in the drawings) arranged on opposite sides of a braked member in the form of a disc 14. Each braking member 12 comprises a block of friction material 12a mounted on a supporting back plate 12b. The disc 14 is mounted, in conventional manner, on a hub (not shown) which is mounted for rotation on a vehicle and is arranged to support a wheel of the vehicle. The braking system 10 also comprises operating means (not shown) in the form of a hydraulic piston and cylinder assembly which is operable to cause the braking members 12 to move towards opposite sides of the disc 14. Each braking member 12 is mounted so that a substantially planar engagement surface 12c thereof can engage the disc 14 to apply a braking force thereto.

The braking system 10 also comprises two wear sensors 20 each of which is operable to detect wear of the block of friction material 12a of one of the braking members 12. Each sensor 20 is operable to detect the wear while the braking system 10 is in service.

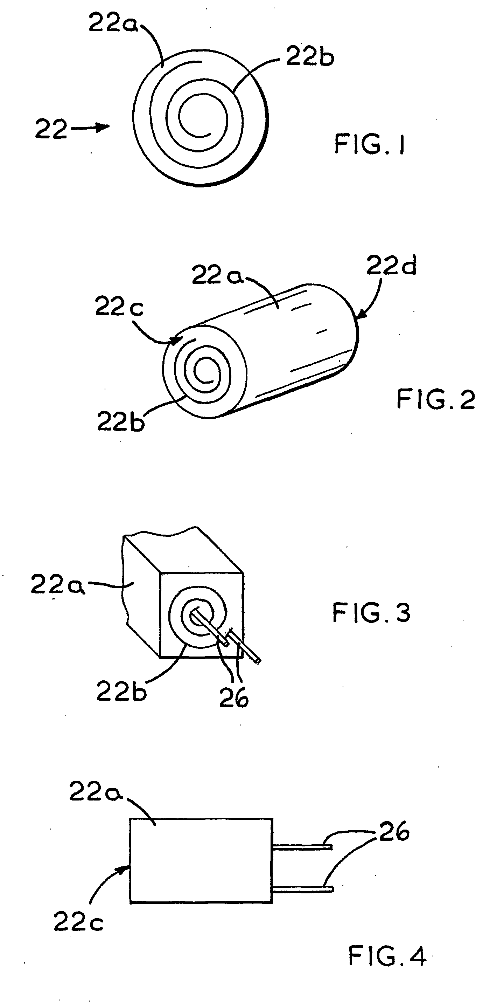

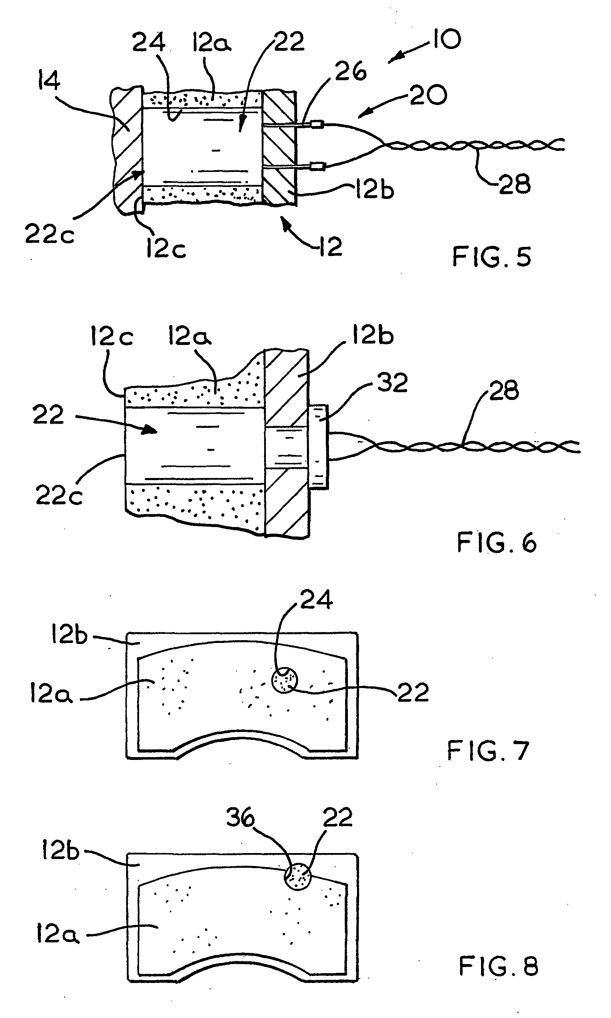

Each wear sensor 20 comprises a sensor head 22 (see figures 1 and 2) which is mounted adjacent to the braking member 12 with which it is associated. Specifically, the sensor head 22 is mounted in a cylindrical recess 24 formed in the friction material 12a of the member 12 as shown in figure 5 and 7. The recess 24 is formed in the friction material 12a after the friction material has been formed by boring into the surface 12c so that the recess 24 has an opening in the surface 12c. The bottom of the recess 24 is formed by the backing plate 12b.

The sensor head 22 comprises a block of electrically-insulating material 22a and an electrical component 22b embedded in the material 22a. The block of material 22a is in the form of a cylinder having a diameter which is slightly less than the diameter of the recess 24 so that the block can fit snugly into the recess. The length of the block is substantially equal to the depth of the friction material 12a of the braking member 12 so that, when the wear sensor 22 is inserted into the recess 24, one end surface 22d of the block engages the backing plate 12b and the other end has its surface 22c substantially flush with the engagement surface 12c (see figure 5). The surface 22c is herein after referred to as the wear surface of the sensor head 22.

The electrically insulating material 22a, which is, in this case, a phenolic resin, is selected to be no more wear resistant than the friction material 12a of the braking member 12. In this case the friction material is of conventional type in which particulate materials are bound together by a phenolic resin. The electrical component 22b is embedded in the material 22a by placing the component in a die cavity (not shown), filling the cavity with the phenolic resin in an uncured state, and curing the resin under heat and pressure. The component 22b is in the form of a metal foil which is rectangular and 0.05mm in thickness. The foil is formed into a spiral shape, with the axis of the spiral coincident with the axis of the cylindrical block of material 22a. The length of the spiral is equal to the length of the block of material 22a so that the ends of the spiral formed by the foil are exposed at the end surfaces of the block, 22c and 22d. The spiral form of the foil 22b enables the material 22a to be continuous throughout the block, thereby ensuring the integrity of the block. The material 22a serves both to retain the foil 22b in its spiral form and also to ensure that electrical current cannot jump from one portion of the foil to another, i.e short circuits are avoided. The foil 22b is formed from the alloy known as Constantan. The surface 22d of the block 22a which engages the backing plate 12b has two electrical contacts 26 projecting therefrom (not shown in figure 2 but visible in figure 5. One of the contacts 26 is connected to the foil 22b at the outer edge of the spiral formed by the foil and the other contact 26 is connected to the foil at the inner end of the spiral. Thus, electrical current passing between the contacts 26 flows around the spiral formed by the foil 22b.

Figures 3 and 4 illustrate an alternative form of the sensor head 22 in which the shape of the block formed by the material 22a is square in transverse cross section. Apart from its transverse cross section the alternative form of sensor head is identical to the sensor head shown in figures 1 and 2 and like numerals are used for its components without further description thereof.

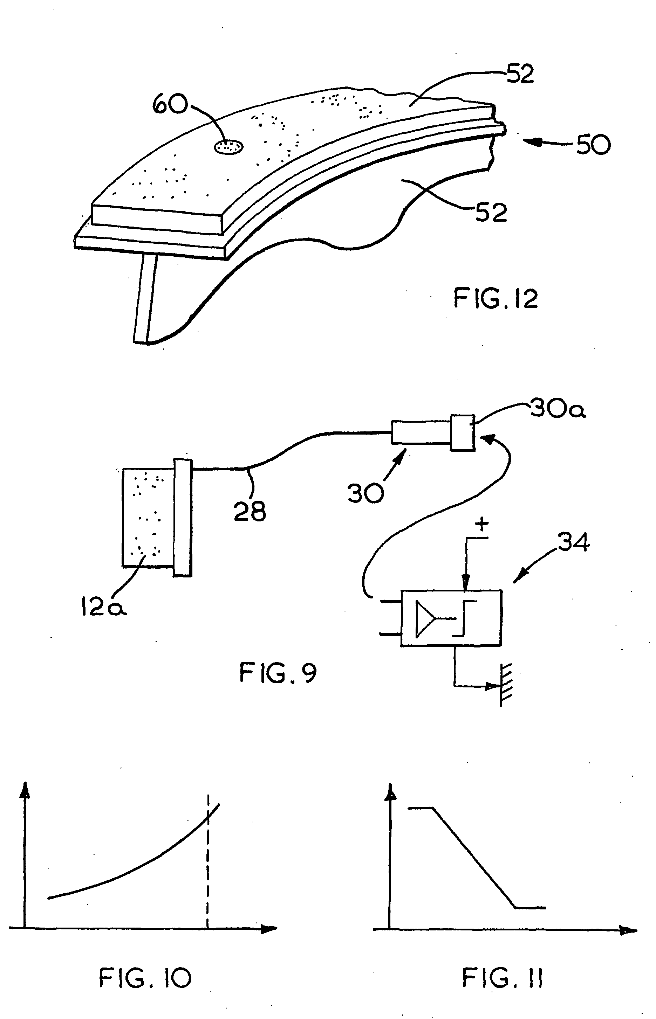

The contacts 26 are arranged to project through holes in the backing plate 12b and are connected to a cable 28 which leads to an electrical circuit 30 (see figure 9). The electrical circuit provides detecting means operable to detect wear of the sensor head.

In the modification of the braking system 10 shown in figure 6, the contacts 26 do not project through holes in the backing plate 12b but instead a plug 32 is mounted a hole in the backing plate and the contacts 26 enter the plug 32 which is connected also to the cable 28.

In the operation of the braking system 10, when the friction material 12a engages the disc 14 across the engagement surface 12c, the wear surface 22c also engages the disc 14. Because the material 22a is less wear resistant than the friction material 12a, the sensor head 22 is worn away at the same rate as the friction material 12a and does not damage the disc 14. As the wear surface 22c is worn away, the foil 22b is also worn away so that the length of the foil reduces and its electrical resistance increases. This electrical resistance can be detected by the electronic circuit 30, thereby giving a measurement of the length of the sensor head 22 and, as the length of the sensor head 22 corresponds to the depth of the friction material 12a, this gives a measurement of the amount of friction material remaining. Specifically, the electronic circuit 30 comprises a plug 30a into which a processor unit 34 can be plugged to periodically or continuously check for wear of the friction material. Figure 10 shows Voltage vs friction material wear, with the y-axis representing Voltage. The processor unit 34 receives signals from all the friction material blocks in the vehicle, and converts all the individual signals into a form which can be used by a vehicle's on-board computer to give indications of the degree of wear and/or warnings when wear has progressed to a certain point. Figure 11 shows a typical example of the output, in this case the y-axis representing wear.

In the braking system 10, the sensor head 22 is surrounded by the friction material 12a so that it is ensured that the entire wear surface 22c will be engaged by the disc 14 and the sensor head is retained against displacement by the surrounding friction material. However, provided that the entire wear surface 22c is engaged by the disc 14 and the sensor head is retained against displacement, the sensor head may be mounted in a recess 36 in the edge of the block of friction material 12a (as shown in figure 8) and therefore is only partially surrounded by the friction material 12a, or the sensor head may be mounted on the backing plate 12b at a portion thereof which projects beyond the edge of the friction material for example the sensor head may be clipped or screwed to the backing plate 12b.

Figure 12 illustrates a second illustrative braking system 50 which is of the drum brake type. The braking system 50 is similar to the braking system 10 in that it comprises a wear sensor 60 which is identical to the wear sensor 20 except that it is mounted in a recess in the friction material 52a mounted on a braking member 52 in the form of a shoe of a drum brake.

## Claims

1. A braking system (10;50) comprising a braking member (12;52) mounted so that an engagement surface (12c) of the braking member can engage a braked member (14) to apply a braking force thereto, the braking system also comprising a wear sensor (20;60) operable to detect wear of the braking member in service, the wear sensor comprising a sensor head (22) mounted so that a wear surface (22c) of the sensor head is substantially flush with the engagement surface (12c) of the braking member (12) and engages the braked member (14) when said engagement surface does so that said engagement and wear surfaces are subject to substantially equal wear, the wear sensor also comprising detecting means (30) operable to detect wear of said sensor head (22) and wherein the sensor head (22) comprises a block of electrically-insulating material (22a) which is no more wear resistant than the braking member (12), **characterised in that** a sheet of metal foil (22b) is embedded in said block with opposite edges thereof connected by conductors (26) to the electrical circuit, one end of the sheet, extending between said opposite edges, being arranged to be exposed at the wear surface to wear by the braked member that causes a continuous variation in the length of the sheet as a function of wear, and the detecting means being operable to detect the electrical resistance of the sheet of foil (22b).

2. A braking system according to claim 1, **characterised in that** the foil (22b) extends substantially normally to the engagement surface (22c) of the sensor head (22).

3. A braking system according to either one of claims 1 and 2, **characterised in that** the foil (22b) is folded and/or coiled so that the area of the foil (22b) which is subject to wear is increased.

4. A braking system according to any one of claims 1 to 3, **characterised in that** the foil (22b) is formed into a spiral.

5. A braking system according to any one of claims 1 to 4, **characterised in that** the electrically insulating material (22a) is selected from the group comprising glasses, ceramics and thermosetting resins.

6. A braking system according to any one of claims 1 to 5, **characterised in that** the braked member (14) is a disc and the braking member (12) comprises friction material (12a) mounted to engage a side surface of said disc.

7. A braking system according to any one of claims 1 to 5, **characterised in that** the braked member is a drum and the braking member is a lining of friction material (52a) mounted to engage an internal surface of said drum.

8. A braking system according to any one of claims 1 to 7, **characterised in that** the sensor head (22) is mounted within a recess (24; 36) defined by friction material (12a) of the braking member (12).

9. A braking system according to any one of claims 1 to 8, **characterised in that** said sensor head (22) is mounted on a support (12b) for the friction material (12a) of the braking member (12).

## Patentansprüche

1. Bremssystem (10; 50), das ein Bremselement (12; 52) umfasst, das derart angebracht ist, dass eine Eingriffsoberfläche (12c) des Bremselements mit einem gebremsten Element (14) in Eingriff stehen kann, um eine Bremskraft darauf anzuwenden, wobei das Bremssystem ebenfalls einen Abnutzungssensor (20; 60) umfasst, der betreibbar ist, um eine Abnutzung des Bremselements im Betrieb zu erfassen, wobei der Abnutzungssensor einen Sensorkopf (22) umfasst, der derart angebracht ist, dass eine Abnutzungsoberfläche (22c) des Sensorkopfs im wesentlichen bündig mit der Eingriffsoberfläche (12c) des Bremselements (12) ist und mit dem gebremsten Element (14) in Eingriff steht, wenn dies die Eingriffsoberfläche tut, so dass die Eingriffs- und Abnutzungsoberflächen im wesentlichen einer gleichen Abnutzung unterworfen sind, wobei der Abnutzungssensor ebenfalls ein Erfassungsmittel (30) umfasst, das betreibbar ist, die Abnutzung des Sensorkopfs (22) zu erfassen und wobei der Sensorkopf (22) einen Block an elektrisch-isolierendem Material (22a) umfasst, das nicht mehr abnutzungsbeständig ist als das Bremselement (12), **dadurch gekennzeichnet, dass** ein Blatt aus Metallfolie (22b) in den Block eingebettet ist, wobei entgegen gesetzte Kanten davon durch Leiter (26) mit einer elektrischen Schaltung verbunden sind, wobei ein Ende des Blatts, das sich zwischen den entgegen gesetzten Kanten erstreckt, derart angeordnet ist, dass es an der Abnutzungsfläche einer Abnutzung durch das gebremste Element ausgesetzt wird, die eine fortwährende Variation in der Länge des Blatts als eine Funktion der Abnutzung verursacht und wobei das Erfassungsmittel betreibbar ist, den elektrischen Widerstand des Blatts aus Folie (22b) zu erfassen.

2. Bremssystem gemäß Anspruch 1, **dadurch gekennzeichnet, dass** sich die Folie (22b) im wesentlichen normal zu der Eingriffsoberfläche (22c) des Sensorkopfs (22) erstreckt.

3. Bremssystem gemäß einem der beiden Ansprüche 1 und 2, **dadurch gekennzeichnet, dass** die Folie (22b) gefaltet und/oder aufgewickelt ist, so dass die Fläche der Folie (22b), die der Abnutzung ausgesetzt ist, vergrößert ist.

4. Bremssystem gemäß einem der Ansprüche 1 bis 3, **dadurch gekennzeichnet, dass** die Folie (22b) in einer Spirale geformt ist.

5. Bremssystem gemäß einem der Ansprüche 1 bis 4, **dadurch gekennzeichnet, dass** das elektrisch isolierende Material (22a) aus einer Gruppe ausgewählt ist, die Gläser, Keramiken und warm-aushärtende Harze umfasst.

6. Bremssystem gemäß einem der Ansprüche 1 bis 5, **dadurch gekennzeichnet, dass** das gebremste Element (14) eine Scheibe ist und das Bremselement (12) Reibmaterial (12a) umfasst, das angebracht ist, mit einer Seitenfläche der Scheibe in Eingriff zu stehen.

7. Bremssystem gemäß einem der Ansprüche 1 bis 5, **dadurch gekennzeichnet, dass** das gebremste Element eine Trommel ist und das Bremselement ein Belag an Reibmaterial (52a) ist, das angebracht ist, um mit einer inneren Oberfläche der Trommel in Eingriff zu stehen.

8. Bremssystem gemäß einem der Ansprüche 1 bis 7, **dadurch gekennzeichnet, dass** der Sensorkopf (22) innerhalb einer Ausnehmung (24; 36) angebracht ist, die durch Reibmaterial (12a) des Bremselements (12) definiert ist.

9. Bremssystem gemäß einem der Ansprüche 1 bis 8, **dadurch gekennzeichnet, dass** der Sensorkopf (22) auf einem Träger (12b) für das Reibmaterial (12a) des Bremselements (12) angebracht ist.

## Revendications

1. Système de freinage (10 ; 50) comprenant un élément de freinage (12 ; 52) monté de manière qu'une surface d'engagement (12c) de l'élément de freinage puisse engager un élément freiné (14) pour appliquer une force de freinage sur celui-ci, le système de freinage comprenant également un capteur d'usure (20 ; 60) adapté à détecter l'usure de l'élément de freinage en service, le capteur d'usure comprenant une tête de capteur (22) montée de manière qu'une surface d'usure (22c) de la tête de capteur soit sensiblement au ras de la surface d'engagement (12c) de l'élément de freinage (12) et engage l'élément freiné (14) lorsque ladite surface d'engagement engage ce dernier de manière que lesdites surfaces d'engagement et d'usure soient soumises à une usure sensiblement égale, le capteur d'usure comprenant également un moyen de détection (30) adapté à détecter l'usure de ladite tête de capteur (22) et dans lequel la tête de capteur (22) comprend un bloc de matériau isolant électriquement (22a) qui n'est pas davantage résistant à l'usure que l'élément de freinage (12), **caractérisé en ce qu'**une feuille de métal (22b) est encastrée dans ledit bloc avec ses bords opposés reliés par des conducteurs (26) au circuit électrique, une extrémité de la feuille s'étendant entre lesdits bords opposés, étant agencée pour être exposée à la surface d'usure à l'usure par l'élément freiné qui provoque une variation continue de la longueur de la feuille en fonction de l'usure, et le moyen de détection étant adapté à détecter la résistance électrique de la feuille de métal (22b).

2. Système de freinage selon la revendication 1,
**caractérisé en ce que** la feuille (22b) s'étend sensiblement perpendiculairement à la surface d'engagement (22c) de la tête de capteur (22).

3. Système de freinage selon l'une des revendications 1 et 2, **caractérisé en ce que** la feuille (22b) est pliée et/ou enroulée de manière que la superficie de la feuille (22b) qui est soumise à l'usure soit accrue.

4. Système de freinage selon l'une quelconque des revendications 1 à 3, **caractérisé en ce que** la feuille (22b) est façonnée en une spirale.

5. Système de freinage selon l'une quelconque des revendications 1 à 4, **caractérisé en ce que** le matériau isolant électriquement (22a) est sélectionné dans le groupe comprenant des verres, des céramiques et des résines thermodurcissables.

6. Système de freinage selon l'une quelconque des revendications 1 à 5, **caractérisé en ce que** l'élément freiné (14) est un disque et l'élément de freinage (12) comprend un matériau de friction (12a) monté pour engager une surface latérale dudit disque.

7. Système de freinage selon l'une quelconque des revendications 1 à 5, **caractérisé en ce que** l'élément freiné est un tambour et l'élément de freinage est une garniture de matériau de friction (52a) montée pour engager une surface interne dudit tambour.

8. Système de freinage selon l'une quelconque des revendications 1 à 7, **caractérisé en ce que** la tête de capteur (22) est montée au sein d'un évidement (24 ; 36) défini par le matériau de friction (12a) de l'élément de freinage (12).

9. Système de freinage selon l'une quelconque des revendications 1 à 8, **caractérisé en ce que** la tête de capteur (22) est montée sur un support (12b) pour le matériau de friction (12a) de l'élément de freinage (12).
